# EUROPÄISCHE PATENTSCHRIFT

(11) **EP 2 216 204 B1**
(45) Veröffentlichungstag und Bekanntmachung des Hinweises auf die Patenterteilung: **06.11.2013**
(21) Anmeldenummer: 10152667.1
(22) Anmeldetag: 04.02.2010
(51) Int. Cl.: B60R 9/045

(54) **Dachlastenträger für Kraftfahrzeuge**
Roof luggage holder for motor vehicles
Galerie pour véhicules automobiles

(30) Priorität: 05.02.2009 DE 102009007744
(43) Veröffentlichungstag der Anmeldung: 11.08.2010
(73) Patentinhaber: JAC Products Europe GmbH, 42285 Wuppertal (DE)
(72) Erfinder: Kolodziej, Klaus, 42329, Wuppertal (DE); Rothstein, Reinhold, 42279, Wuppertal (DE); Hoffmann, Dirk, 44627, Herne (DE)
(74) Vertreter: Christophersen & Partner

(56) Entgegenhaltungen:
- EP-A1- 0 894 672
- WO-A1-90/02668
- WO-A1-96/24509
- DE-U1- 9 407 580

## Beschreibung

Die Erfindung betrifft einen Dachlastenträger für Kraftfahrzeuge mit einem sich zwischen zu beiden Seiten längs des Fahrzeugdachs dachfest angeordneten Längsträgern erstreckenden Querträger, der sich aus einem Profilrohr und an dessen Enden längsverschieblich in Bezug auf das Profilrohr angeordneten Stützfüßen zusammensetzt, wobei jeder Stützfuß
- mit einem Riegel zur lösbaren Befestigung des Stützfußes an dem jeweiligen Längsträger,
- mit einer ein gegen das Profilrohr anpressbares Klemmelement aufweisenden Klemmeinrichtung und
- mit einem von Hand antreibbaren, sowohl gegenüber dem Klemmelement als auch gegenüber dem Riegel beweglichen Getriebeelement zur Übertragung der Antriebsbewegung zugleich auf das Klemmelement und den Riegel
versehen ist.

Bei modernen Kraftfahrzeugen erfolgt die Befestigung von Dachlastenträgern an einer Dachreling, also an zwei sich in Fahrzeuglängsrichtung erstreckenden Profilen, welche entweder, abgestützt über zwei oder mehr Relingfüße, einen gewissen Abstand zur Außenseite des Fahrzeugdachs aufweisen, oder aber abstandslos direkt auf der Dachaußenseite befestigt oder im Blech der Dachhaut sogleich mit angeformt sind.

Aufgrund des modernen Karosseriedesigns verlaufen bei vielen Fahrzeugen die beiden Relingprofile nicht genau parallel zueinander. Denn in der Regel sind PKW-Fahrzeugdächer nach hinten leicht verjüngend gestaltet, weshalb die beidseits angeordneten Relingprofile dieser Gestaltung folgen, und sich ihr Abstand nach fahrzeughinten verringert. Dies hat zur Folge, dass auch der Querträger eines Dachlastenträgers bei Montage weiter vorne eine größere wirksame Länge aufweisen muss, als bei einer Montage weiter hinten. Daher sind derartige Querträger längenverstellbar, indem sie sich aus einem Profilrohr und an dessen Enden längsverschieblich in Bezug auf das Profilrohr angeordneten Stützfüßen zusammensetzen, die die Verbindung zu den zwei Längsträgern herstellen. Bei der Montage des Querträgers an den beiden die Längsträger bildendem Relingprofilen muss daher zunächst die wirksame Länge des Querträgers richtig eingestellt, und Profilstab und Stützfüße müssen sodann zueinander fixiert werden, etwa durch Betätigung einer entsprechenden Klemmeinrichtung. Ist dies geschehen, erfolgt anschließend in einem weiteren Montageschritt die Verriegelung der Stützfüße an dem Längsträger.

Ein Dachlastenträger für Kraftfahrzeuge mit den Merkmalen des Oberbegriffs ist aus der PCT WO 90/02668 A1 bekannt. Jeder der längsverschieblich in Bezug auf das Profilrohr angeordneten Stützfüße weist einen Riegel zur lösbaren Befestigung des Stützfußes an dem jeweiligen Längsträger und eine Klemmeinrichtung mit einer von innen gegen das Profilrohr anpressbaren Druckplatte auf. Ferner ist in dem Stützfuß ein von Hand eintreibbares, sowohl gegenüber der Druckplatte als auch gegenüber dem Riegel bewegliches Getriebeelement angeordnet. Dessen Betätigung mittels eines Handgriffs bewirkt zugleich einen Druck der Druckplatte unter Einklemmung des Profilrohrs, und ein Anziehen des Riegels. Zum Sicherstellen eines ausreichenden Klemmdrucks, gerade auch zur sicheren Fixierung des Profilrohrs bei schweren Dachlasten und bei Kurvenfahrt des Fahrzeuges, ist ein erheblicher Kraftaufwand bei der Betätigung des Handhebels erforderlich.

Ziel der Erfindung ist eine auch ohne großen Kraftaufwand sichere Fixierung des Dachlastenträgers für solche Dachträgersysteme, deren Längsträger einen in Längsrichtung sich verändernden Abstand zueinander aufweisen. Beibehalten werden soll der Vorteil, dass ein Versetzen des Querträgers zwischen einer vorderen und einer hinteren Position oder umgekehrt möglich ist, ohne neben der Ent- und wieder Verriegelung an den Längsträgern weitere Löse- oder Befestigungsschritte durchzuführen.

Zur Lösung wird ein Dachlastenträger für Kraftfahrzeuge mit den eingangs angegebenen Merkmalen vorgeschlagen, bei dem das Klemmelement der Klemmeinrichtung Bestandteil eines sich in Längsrichtung des Profilrohrs erstreckenden Klemmarms ist, der als Hebelarm gestaltet ist und dessen dem Klemmelement abgewandtes Ende gelenkig mit dem Getriebeelement gekoppelt ist.

Ein solcher Dachlastenträger für Kraftfahrzeuge ermöglicht eine Vereinfachung der Fixierung des Querträgers auch bei solchen Dachträgersystemen, deren Längsträger einen in Längsrichtung sich verändernden Abstand zueinander aufweisen. Ein Versetzen des Querträgers zwischen einer vorderen und einer hinteren Position oder umgekehrt ist möglich, ohne dass zusätzlich zu dem Lösen und Wiederverriegelung an den Längsträgern noch weitere Löse- oder Befestigungsschritte durchgeführt werden müssen. Vielmehr wird durch den Einsatz eines sowohl mit dem Klemmelement als auch mit dem Riegel gekoppelten Getriebeelements erreicht, dass durch eine einzige Handbewegung sowohl die Auszugslänge des Querträgers fixiert, als auch der Querträger an dem jeweiligen Längsträger verriegelt wird. Umgekehrt reicht eine einzige Handbewegung aus, um sowohl die Verriegelung des Stützfußes an dem Längsträger aufzuheben, als auch die Einstellung der Länge des Querträgers aufzuheben.

Vorteilhafte Ausgestaltungen des Dachlastenträgers sind in den Unteransprüchen angegeben.

Um die Anzahl der Bauteile gering zu halten, kann das Getriebeelement in Bezug auf den Stützfuß schwimmend angeordnet sein, indem das Getriebeelement in Bezug auf den Stützfuß in mindestens zwei Bewegungsgeraden beweglich angeordnet ist, z. B. zugleich drehbar und in der Höhe beweglich.

Mit einer weiteren Ausgestaltung wird vorgeschlagen, dass das Getriebeelement ein Gelenkhebel mit mindestens zwei daran ausgebildeten Gelenken ist, von denen das erste Gelenk den Gelenkhebel mittelbar oder unmittelbar mit dem Klemmelement, und das zweite Element den Gelenkhebel mittelbar oder unmittelbar mit dem Riegel koppelt.

Mit einer weiteren Ausgestaltung wird vorgeschlagen, dass das Getriebeelement ein zweiarmiger Gelenkhebel ist mit einem ersten Hebelarm, der sich zwischen dem ersten und dem zweiten Gelenk erstreckt, und einen zu dem ersten Hebelarm starren zweiten Hebelarm, dessen dem ersten Hebelarm entferntes Ende der Betätigung des Gelenkhebels dient. Als Handhabe dient vorzugsweise ein gelenkig mit dem Ende des zweiten Hebelarms verbundener Schwenkgriff. Der Schwenkgriff kann nach Art einer Schale ausgebildet sein, welche im Schließzustand den Stützfuß und einen Endabschnitt des Profilrohrs nach oben hin abdeckt, und vorzugsweise auch nach vorne und nach hinten in Fahrzeuglängsrichtung abdeckt. Der Schwenkgriff dient auf diese Weise zugleich als Schutzkappe.

Mit einer weiteren Ausgestaltung wird vorgeschlagen, dass der Schwenkgriff um eine Achse schwenkbar ist, welche an dem Profilrohr längsgeführt ist.

Mit einer weiteren Ausgestaltung wird vorgeschlagen, dass das dem Gelenk abgewandte Ende des Riegels als formschlüssig in einer Nut oder Hinterschneidung des Längsträgers verriegelbarer Haken gestaltet ist. Vorzugsweise ist die Nut oder Hinterschneidung nach unten, und der Haken des Riegels nach oben offen gestaltet.

Damit der Riegel in den angestrebten Formschluss mit dem Längsträger gelangt, z. B. durch Hineinbewegen in die Nut oder Hinterschneidung des Längsträgers, kann an dem Stützfuß eine starre Führung für die Längsführung des Riegels zwischen seiner verriegelten und seiner entriegelten Stellung angeordnet sein. Hierdurch ist stets das zuverlässige Eintreten des Riegels in die entsprechende Gegenstruktur, z. B. die Nut bzw. Hinterschneidung, sichergestellt.

Gemäß einer weiteren Ausgestaltung kann, um die wirksame Länge des Riegels einstellen zu können, dieser mit einem Gewindeelement versehen sein.

Der Klemmarm, an dem das Klemmelement ausgebildet ist, erstreckt sich vorzugsweise mit dem überwiegenden Teil seiner Länge im Inneren des Profilrohrs und ragt nur soweit aus dem Profilrohr heraus, wie dies für die Koppelung mit dem Getriebeelement erforderlich ist.

Mit einer weiteren Ausgestaltung wird vorgeschlagen, dass das dem Klemmelement nähere Ende des Klemmarms mit dem Stützfuß verbunden ist, dass das Profilrohr für den Durchtritt dieser Verbindung einen Längsschlitz aufweist, und dass die Länge des Längsschlitzes mindestens gleich ist der maximalen Längsverschieblichkeit des Stützfußes in Bezug auf das Profilrohr.

Weitere Vorteile und Einzelheiten ergeben sich aus der nachfolgenden Beschreibung der auf der Zeichnung dargestellten Ausführungsbeispiele. Im Einzelnen zeigen:
- Figur 1: In einer vereinfachten, ersten Ausführungsform einen Dachlastenträger für ein Fahrzeugdach, wobei von dem Dachlastenträger nur dessen einer Endbereich dargestellt ist, und wobei ein Querträger des Dachlastenträgers in gelöstem Zustand wiedergegeben ist;
- Figur 2: die Gegenstände nach Figur 1 im verriegelten Zustand;
- Figur 3: in einer konstruktiv durchgestalteten zweiten Ausführungsform das eine Ende eines Dachlastenträgers, wobei dieser in gelöstem Zustand wiedergegeben ist;
- Figur 4: die Gegenstände nach Figur 3 im verriegelten Zustand und
- Figur 5: eine perspektivische Ansicht auf dem Dachlastenträger im Bereich des Stützfußes.

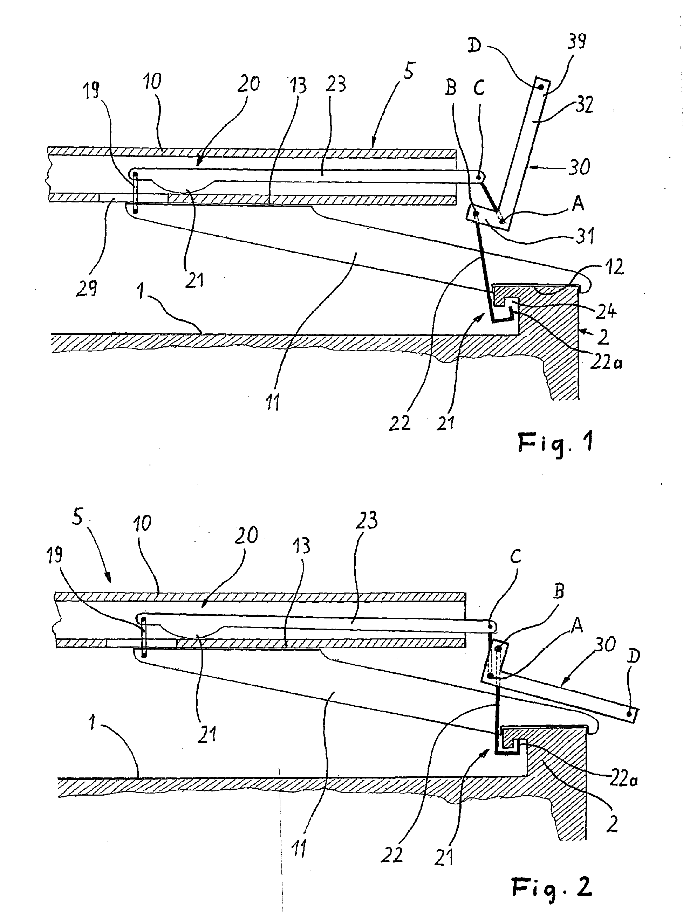

Die Figuren 1 und 2 zeigen einen Schnitt durch ein Fahrzeugdach 1 mit einem entlang dessen Außenrand angeordneten Längsträger 2. Entlang des anderen Außenrandes erstreckt sich spiegelbildlich ein zweiter solcher Längsträger. Jeder Längsträger 2 kann ein separates Relingprofil einer Dachreling sein, oder auch eine entsprechende Gestaltung des Fahrzeugdachs 1 selbst. Im Falle einer separaten Dachreling kann deren Profil entweder, abgestützt über zwei oder mehr Relingfüße, einen gewissen Abstand zu dem Fahrzeugdach 1 aufweisen oder abstandslos direkt auf der Dachaußenseite, eventuell in einer Vertiefung der Dachaußenseite, befestigt sein. Jeder Längsträger 2 ist in seiner Längsrichtung mit einer nachfolgend noch näher beschriebenen Struktur 24 versehen, an welcher sich ein Dachlastenträger durch Formschluss befestigen lässt.

Bestandteil des Dachlastenträgers ist ein Querträger 5, welcher sich aus einem von der einen bis zur anderen Fahrzeugseite reichenden Profilrohr 10, sowie aus Stützfüßen 11 im Bereich beider Enden des Profilrohrs 10 zusammensetzt. Die Figuren 1 und 2 zeigen jeweils nur das eine Ende dieses Querträgers und daher auch nur einen Stützfuß 11. Der im Bereich des anderen Endes angeordnete, mit dem anderen Längsträger 2 verbindbare Stützfuß ist jedoch symmetrisch aufgebaut und auch im Übrigen analog gestaltet.

Jeder Stützfuß 11 ist außen mit einer nach unten weisenden Schale 12 versehen, mit der er sich auf dem jeweiligen Längsträger 2 abstützt. Die Kontur der Schale 12 ist zu diesem Zweck an die Querschnittskontur des Profils des Längsträgers 2 angepasst. Da die Schale 12 den fahrzeuginneren sowie den fahrzeugäußeren Rand des Längsträgers 2 etwas übergreift, ist der Stützfuß 11 quer zur Fahrzeuglängsachse eindeutig festgelegt.

Von der Schale 12 aus erstreckt sich der Stützfuß 11 nach fahrzeuginnen und bildet dort eine Auflage 13 für das Profilrohr 10. Die Auflage 13 ist zudem Bestandteil einer Klemmeinrichtung 20, zu der ferner ein mit einem Klemmelement 21 versehener Klemmarm 23 und eine Verbindung 19 gehören. Die Verbindung 19 ist gelenkig gestaltet und verbindet den fahrzeuginneren, kürzeren Hebelarm des Klemmarms 23 mit dem Stützfuß 11. Zur Hindurchführung der Verbindung 19 ist das Profilrohr 10 in seiner Unterseite mit einem Längsschlitz 29 versehen. Dessen Länge ist mindestens gleich der maximalen Längsverschieblichkeit des Stützfußes 11 in Bezug auf das Profilrohr 10.

Der Klemmarm 23 ist als Hebelarm gestaltet, dessen Hebellager das Klemmelement 21 ist. Dieses ist ein ballig geformter Nocken, welcher sich von innen her gegen das Profilrohr 10 abstützt. Ein zum Fahrzeugdach 1 hin gerichteter Zug an dem längeren Hebelarm des Klemmarms 23 führt daher zu einem Anpressen des Klemmelements 21 gegen das Profilrohr 10, wobei die Auflage 13 des Stützfußes 11 das Widerlager bildet. Die Wandung des Profilrohrs 10 wird zwischen Klemmelement 21 und Auflage 13 eingeklemmt, wodurch Profilrohr 10 und Stützfuß 11 in Längsrichtung zueinander fixiert sind. Um auf den Klemmarm 23 die zum Fahrzeugdach 1 hin gerichtete Zugkraft aufbringen zu können, ragt der Klemmarm 23 mit seinem längeren Hebelarm aus dem Profilrohr 10 heraus, und ist dort mit einem Gelenk C versehen.

Die Befestigung des Stützfußes 11 an dem Längsträger 2 wird durch Zug an einem Riegel 22 erreicht, welcher mit einem unten angeformten Haken 22a von unten her in einer Längsnut 24 des Längsträgers 2 verriegelbar ist. Die Figur 2 zeigt Riegel 22 und Haken 22a in verriegelter Stellung, und die Figur 1 dieselben Bauteile in entriegelter Stellung, in welcher der Riegel 22 soweit abgesenkt ist, dass der Haken 22a von der Nut 24 freikommt.

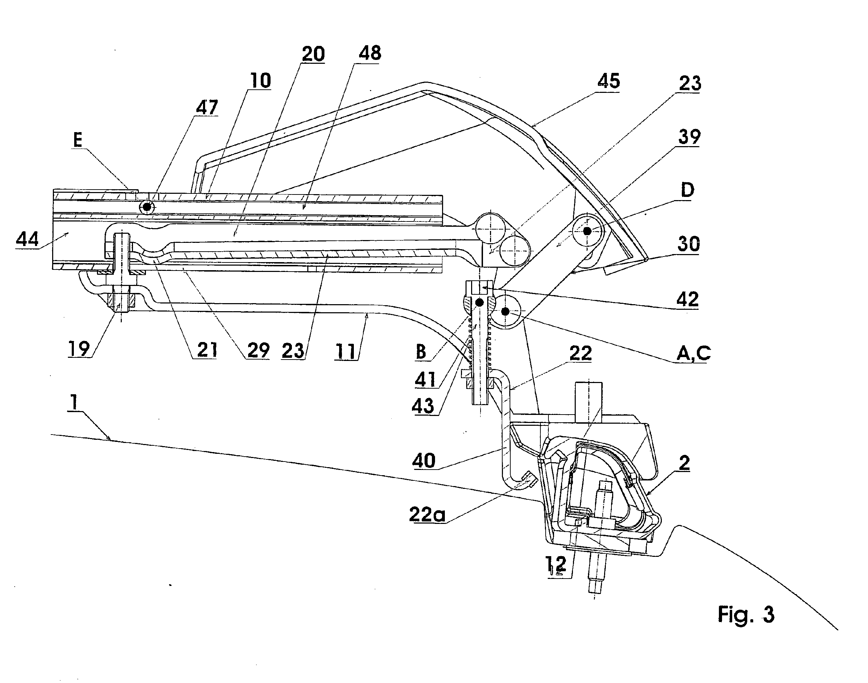

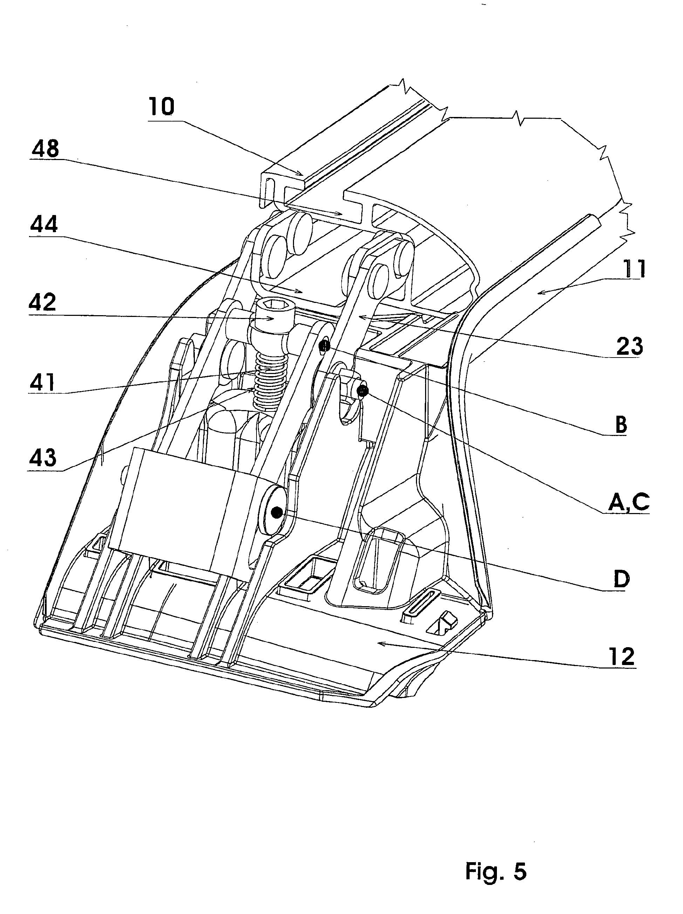

Sowohl das Spannen der Klemmeinrichtung 20, als auch das Schließen des Riegels 22 erfolgt gemeinsam und in einer einzigen Bewegung mittels eines Getriebeelements 30. Bei den hier beschriebenen Ausführungsbeispielen ist das Getriebeelement ein zweiarmiger Gelenkhebel 30. Über ein an dem Gelenkhebel 30 angeordnetes Gelenk A ist der Gelenkhebel 30 mit dem äußeren Ende des Klemmarms 23, also mit dem Gelenk C, gekoppelt. Die beiden Gelenke A und C können auch in einem einzigen Gelenk zusammenfallen. Dies ist bei der später beschriebenen Ausführungsform Figuren 3, 4 und 5 der Fall.

Ein weiteres, an dem Gelenkhebel 30 angeordnetes Gelenk B koppelt den Gelenkhebel mit dem Riegel 22. Die Gelenke A und B definieren zwischen sich einen ersten Hebelarm 31 des Gelenkhebels 30. Über das Gelenk A hinaus setzt sich dieser erste Hebelarm 31 in einem hierzu starren zweiten Hebelarm 32 fort, wobei der zweite Hebelarm 32 deutlich länger als der erste Hebelarm 31 ist. Am äußeren Ende 39 des zweiten Hebelarms 32 befindet sich ein Gelenk D. Das Gelenk D bildet die Verbindung zwischen dem Gelenkhebel 30 und einem Schwenkgriff, welcher später in Verbindung mit der zweiten Ausführungsform noch beschrieben werden wird.

Ein Vergleich der Figuren 1 und 2 illustriert die Wirkungsweise des Getriebeelements 30. Bei Figur 1 befinden sich alle Teile im gelösten Zustand. Die Klemmeinrichtung 20 übt keine Klemmkraft auf bzw. ist die Klemmkraft so gering, dass sich der Stützfuß 11 ohne weiteres in Längsrichtung des Profilrohrs 10 verschieben lässt. Der Riegel 22 ist außer Eingriff mit dem Längsträger 2. Wird nun der zweite Hebelarm 32 des Getriebeelements 30 im Uhrzeigersinn verschwenkt, führt dies zugleich über das Gelenk A zu einem Zug auf den Klemmarm 23, so dass dieser geringfügig zum Dach hin verschwenkt, und über das Gelenk B zu einem gegensinnigen Zug auf den Riegel 22, wodurch dieser in seine verriegelnde Position gezogen wird.

Figur 2 zeigt die Gegenstände bei maximal verschwenktem Getriebeelement 30. In dieser Endstellung ist die Klemmeinrichtung 20 gespannt, so dass Profilrohr und Stützfuß reibschlüssig zueinander fixiert sind, und der Riegel 22 ist formschlüssig an den Längsträger 2 verriegelt. Von Vorteil ist, dass sich in dieser Stellung der Gelenkpunkt A zu der Klemmeinrichtung 20 und der Gelenkpunkt B zu dem Riegel 22 in einer Übertotpunktlage befinden, in der das Getriebeelement 30 allein durch die an ihm wirkenden Kraftvektoren blockiert ist und erst gelöst werden kann, wenn beim Zurückschwenken zunächst das zusätzliche Moment dieser Übertotpunktsicherung überwunden wird.

Die Figuren 3, 4 und 5 zeigen eine praktische Ausführungsform des in den Figuren 1 und 2 vereinfacht dargestellten Befestigungsprinzips. Gleiche bzw. gleichwirkende Bauteile sind mit denselben Bezugszeichen wie bei der ersten Ausführungsform nach den Figuren 1 und 2 versehen.

Bei der zweiten Ausführungsform fallen die beiden Gelenkpunkte A und C zusammen. Ferner ist vorgesehen, dass sich die wirksame Länge des Riegels 22 einstellen lässt. Zu diesem Zweck ist der Riegel 22 mehrteilig gestaltet mit einem Hakenabschnitt 40, an dem der Haken 22a angeformt ist, sowie einem relativ zu dem Hakenabschnitt 40 verdrehbaren Gewindeelement 41, welches an seinem dem Haken 22a abgewandten Ende mit einer Schlüsselfläche 42 versehen ist. Durch Verdrehen des Gewindeelements 41 lässt sich die wirksame Länge des Riegels 22, d. h. dessen Länge zwischen Gelenk B und Haken 22a, verändern. Damit sich das Gewindeelement 41 nicht versehentlich verstellt, sind geeignete Reibungsmittel vorhanden, z. B. ein Reibgewinde oder eine reibungserhöhende Feder 43.

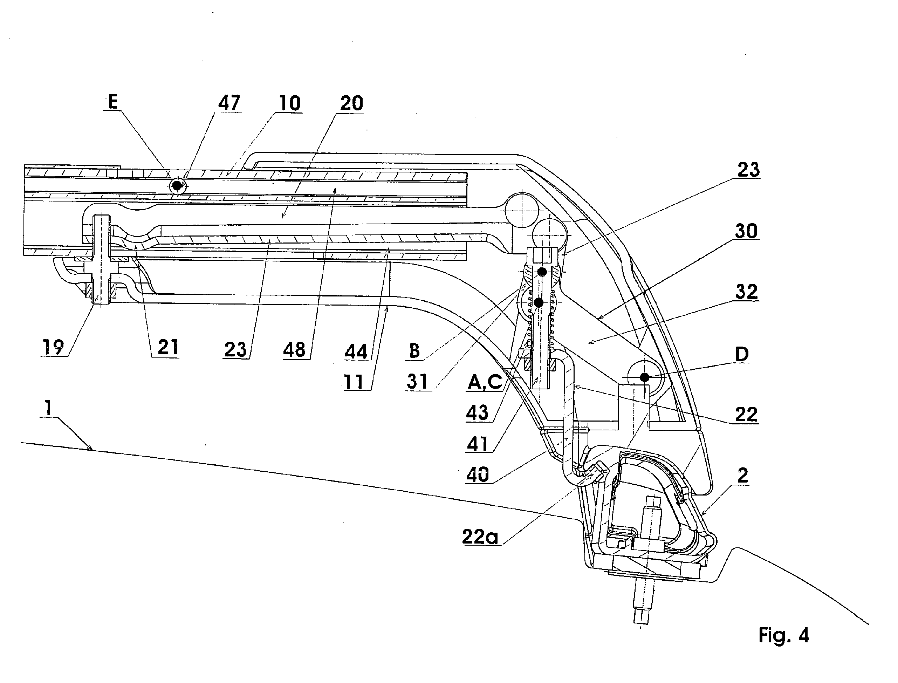

Ein Vergleich der Öffnungsstellung Figur 3 mit der Schließstellung Figur 4 zeigt, dass der Riegel 22 auf dem Weg von seiner entriegelten in seine verriegelte Stellung nicht nur eine Bewegung nach oben, d. h. vom Dach weg, durchführt, sondern er zugleich eine nach fahrzeugaußen gerichtete Bewegung durchführen muss, damit der Haken 22a sicher in die Nut 24 gelangt. Zur Realisierung dieser überlagerten Bewegung kann an dem Stützfuß 11 eine starre Führung für die Längsführung des Riegels 22 ausgebildet sein. Diese Führung sorgt für eine Riegelbewegung dergestalt, das beim Anziehen des Riegels dessen Haken 22a sicher in die nach unten offene Nut 24 eintritt.

Eine Ergänzung der zweiten Ausführungsform in Vergleich zur ersten, vereinfachten Ausführungsform stellt auch ein zusätzlicher Schwenkgriff 45 dar. Der Schwenkgriff 45 ist über das Gelenk D mit dem Ende 39 des Getriebeelements 30 verbunden, und ist ferner am Profilrohr 10 des Querträgers am Ort E gelagert. Den Ort E bildet eine Achse 47 des Schwenkgriffs 45, welche sowohl Schwenkachse, als auch längs des Profilrohrs 10 bewegliches Gleitelement ist. Zu diesem Zweck ist das Profilrohr 10 zusätzlich zu dem Kanal 44, in dem sich der Klemmarm 23 befindet, mit einem oberhalb angeordneten Kanal 48 versehen, in welchem die den Schwenkort E bestimmende Achse 47 in Richtung des Profilrohrs 10 längsgeführt ist.

Im Hinblick auf die für die Bewegung des Schwenkgriffs 45 erforderlichen Freiheitsgrade kann es ferner sinnvoll sein, im Gelenk D eine Langlochführung vorzusehen und so ein gewisses Spiel zu ermöglichen.

Der Schwenkgriff 45 übt eine Doppelfunktion aus. Primär dient er als Handgriff dem Verschwenken des Gelenkhebels 30. Zudem ist der Schwenkgriff 45 als vorzugsweise aus Kunststoff bestehende Schale gestaltet, welche, wie vor allem der Vergleich der Figuren 3 und 4 zeigt, im Schließzustand (Figur 4) den Stützfuß sowie die darin enthaltenden Elemente sowohl nach oben hin, als auch nach vorne und nach hinten in Fahrzeugrichtung abdeckt, und so gegen Schmutz und Witterungseinflüsse schützt. Mittels eines Schlosses lässt sich der Schwenkgriff 45 an dem Stützfuß 11 verriegeln.

### Bezugszeichenliste

- 1: Fahrzeugdach
- 2: Längsträger
- 5: Querträger
- 10: Profilrohr
- 11: Stützfuß
- 12: Schale
- 13: Auflage
- 19: Verbindung
- 20: Klemmeinrichtung
- 21: Klemmelement
- 22: Riegel
- 22a: Haken
- 23: Klemmarm
- 24: Nut
- 29: Längsschlitz
- 30: Getriebeelement, Gelenkhebel
- 31: erster Hebelarm
- 32: zweiter Hebelarm
- 39: Ende
- 40: Hakenabschnitt
- 41: Gewindeelement
- 42: Schlüsselfläche
- 43: Feder
- 44: Kanal
- 45: Schwenkgriff
- 47: Achse
- 48: Kanal

- A: Gelenk
- B: Gelenk
- C: Gelenk
- D: Gelenk
- E: Ort

## Patentansprüche

1. Dachlastenträger für Kraftfahrzeuge mit einem sich zwischen zu beiden Seiten längs des Fahrzeugdachs dachfest angeordneten Längsträgern (2) erstreckenden Querträger (5), der sich aus einem Profilrohr (10) und an dessen Enden längsverschieblich in Bezug auf das Profilrohr (10) angeordneten Stützfüßen (11) zusammensetzt, wobei jeder Stützfuß (11)
- mit einem Riegel (22) zur lösbaren Befestigung des Stützfußes (11) an dem jeweiligen Längsträger (2),
- mit einer ein gegen das Profilrohr (10) anpressbares Klemmelement (21) aufweisenden Klemmeinrichtung (20) und
- mit einem von Hand antreibbaren, sowohl gegenüber dem Klemmelement (21) als auch gegenüber dem Riegel (22) beweglichen Getriebeelement (30) zur Übertragung der Antriebsbewegung zugleich auf das Klemmelement (21) und den Riegel (22)
versehen ist, **dadurch gekennzeichnet, dass** das Klemmelement (21) der Klemmeinrichtung (20) Bestandteil eines sich in Längsrichtung des Profilrohrs (10) erstreckenden Klemmarms (23) ist, der als Hebelarm gestaltet ist und dessen dem Klemmelement (21) abgewandtes Ende gelenkig mit dem Getriebeelement (30) gekoppelt ist.

2. Dachlastenträger nach Anspruch 1 **dadurch gekennzeichnet, dass** das Getriebeelement (30) in Bezug auf den Stützfuß (11) in mindestens zwei Bewegungsgraden beweglich angeordnet ist.

3. Dachlastenträger nach einem der Ansprüche 1 oder 2, **dadurch gekennzeichnet, dass** das Getriebeelement ein Gelenkhebel (30) mit mindestens zwei daran ausgebildeten Gelenken (A, B) ist, von denen das erste Gelenk (A) den Gelenkhebel (30) mittelbar oder unmittelbar mit dem Klemmelement (21), und das zweite Gelenk (B) den Gelenkhebel (30) mittelbar oder unmittelbar mit dem Riegel (22) koppelt.

4. Dachlastenträger nach einem der Ansprüche 1 bis 3, **dadurch gekennzeichnet, dass** das Getriebeelement ein zweiarmiger Gelenkhebel (30) ist mit einem ersten Hebelarm (31), der sich zwischen einem ersten Gelenk (A) und einem zweiten Gelenk (B) erstreckt, und einem zu dem ersten Hebelarm (31) starren zweiten Hebelarm (32), dessen dem ersten Hebelarm (31) abgewandtes Ende (39) der Betätigung des Gelenkhebels (30) dient.

5. Dachlastenträger nach Anspruch 4, **gekennzeichnet durch** einen gelenkig mit dem Ende (39) des zweiten Hebelarms (32) verbundenen Schwenkgriff (45).

6. Dachlastenträger nach Anspruch 5, **dadurch gekennzeichnet, dass** der Schwenkgriff (45) als Schale gestaltet ist, welche im Schließzustand den Stützfuß (11) und einen Endabschnitt des Profilrohrs (10) nach oben hin abdeckt, vorzugsweise auch in Fahrzeuglängsrichtung abdeckt.

7. Dachlastenträger nach Anspruch 5 oder 6, **dadurch gekennzeichnet, dass** der Schwenkgriff (45) um eine Achse (47) schwenkbar ist, welche an dem Profilrohr (10) längsgeführt ist.

8. Dachlastenträger nach einem der Ansprüche 3 bis 7, **dadurch gekennzeichnet, dass** das dem Gelenk (B) abgewandte Ende des Riegels (22) als formschlüssig in einer Nut (24) oder Hinterschneidung des Längsträgers (2) verriegelbarer Haken (22a) gestaltet ist.

9. Dachlastenträger nach Anspruch 8, **dadurch gekennzeichnet, dass** die Nut (24) oder Hinterschneidung nach unten, und der Haken (22a) nach oben offen ist.

10. Dachlastenträger nach einem der vorangehenden Ansprüche, **dadurch gekennzeichnet, dass** der Riegel (22) zur Einstellung seiner wirksamen Länge mit einem Gewindeelement (41) versehen ist.

11. Dachlastenträger nach einem der vorangehenden Ansprüche, **dadurch gekennzeichnet, dass** an dem Stützfuß (11) eine starre Führung für die Längsführung des Riegels (22) zwischen seiner verriegelten und seiner entriegelten Stellung angeordnet ist.

12. Dachlastenträger nach einem der vorangehenden Ansprüche, **dadurch gekennzeichnet, dass** sich der Klemmarm (23) mit dem überwiegenden Teil seiner Länge im Inneren des Profilrohrs (10) erstreckt.

13. Dachlastenträger nach Anspruch 12, **dadurch gekennzeichnet, dass** das dem Klemmelement (21) nähere Ende des Klemmarms (23) mit dem Stützfuß (11) verbunden ist, dass das Profilrohr (10) für den Durchtritt dieser Verbindung (19) einen Längsschlitz (29) aufweist, und dass die Länge des Längsschlitzes (29) mindestens gleich ist der maximalen Längsverschieblichkeit des Stützfußes (11) in Bezug auf das Profilrohr (10).

## Claims

1. Roof carrier for motor vehicles, with a crossmember (5) which extends between longitudinal members (2) arranged on both sides along the vehicle roof in a manner mounted on the roof and which is composed of a shaped tube (10) and supporting feet (11) arranged at the ends of the latter in a longitudinally displaceable manner with respect to the shaped tube (10), wherein each supporting foot (11) is provided
- with a bolt (22) for releasably fastening the supporting foot (11) to the respective longitudinal member (2),
- with a clamping device (20) which has a clamping element (21) which is pressable against the shaped tube (10), and
- with a gearing element (30) which is drivable manually and is movable both in relation to the clamping element (21) and in relation to the bolt (22), for transmitting the driving movement to the clamping element (21) and to the bolt (22) simultaneously,
**characterized in that** the clamping element (21) of the clamping device (20) is part of a clamping arm (23) which extends in the longitudinal direction of the shaped tube (10), is configured as a lever arm and of which the end which faces away from the clamping element (21) is coupled in an articulated manner to the gearing element (30).

2. Roof carrier according to Claim 1, **characterized in that** the gearing element (30) is arranged movably in at least two degrees of movement with respect to the supporting foot (11).

3. Roof carrier according to either of Claims 1 and 2, **characterized in that** the gearing element is an articulated lever (30) with at least two joints (A, B) which are formed thereon and of which the first joint (A) couples the articulated lever (30) indirectly or directly to the clamping element (21), and the second joint (B) couples the articulated lever (30) indirectly or directly to the bolt (22).

4. Roof carrier according to one of Claims 1 to 3, **characterized in that** the gearing element is a two-armed articulated lever (30) with a first lever arm (31) which extends between a first joint (A) and a second joint (B), and with a second lever arm (32) which is rigid with respect to the first lever arm (31) and of which the end (29) which faces away from the first lever arm (31) serves for actuating the articulated lever (30).

5. Roof carrier according to Claim 4, **characterized by** a pivoting handle (45) which is connected in an articulated manner to the end (39) of the second lever arm (32).

6. Roof carrier according to Claim 5, **characterized in that** the pivoting handle (45) is designed as a shell which, in the closed state, covers the supporting foot (11) and an end section of the shaped tube (10) upwards, and preferably also covers same in the longitudinal direction of the vehicle.

7. Roof carrier according to Claim 5 or 6, **characterized in that** the pivoting handle (45) is pivotable about a spindle (47) which is guided longitudinally on the shaped tube (10).

8. Roof carrier according to one of Claims 3 to 7, **characterized in that** that end of the bolt (22) which faces away from the joint (B) is designed as a hook (22a) which is lockable in an interlocking manner in a groove (24) or undercut of the longitudinal member (2).

9. Roof carrier according to Claim 8, **characterized in that** the groove (24) or undercut is open downwards, and the hook (22a) is open upwards.

10. Roof carrier according to one of the preceding claims, **characterized in that** the bolt (22) is provided with a threaded element (41) for adjustment of the effective length thereof.

11. Roof carrier according to one of the preceding claims, **characterized in that** a rigid guide for the longitudinal guidance of the bolt (22) between the locked and the unlocked position thereof is arranged on the supporting foot (11).

12. Roof carrier according to one of the preceding claims, **characterized in that** the clamping arm (23) extends with the predominant part of the length thereof in the interior of the shaped tube (10).

13. Roof carrier according to Claim 12, **characterized in that** that end of the clamping arm (23) which is closer to the clamping element (21) is connected to the supporting foot (11), **in that** the shaped tube (10) has a longitudinal slot (29) for the passage of said connection (19), and **in that** the length of the longitudinal slot (29) is at least identical to the maximum longitudinal displaceability of the supporting foot (11) with respect to the shaped tube (10).

## Revendications

1. Galerie de toit pour véhicules à moteurs avec une traverse (5) s'étendant des deux côtés le long de longerons (2) disposés de manière fixe le long du toit du véhicule, qui est constituée d'un tube profilé (10) et des pieds d'appui (11) disposés à ses extrémités de manière coulissante dans le sens longitudinal par rapport au tube profilé (10), chaque pied d'appui (11) étant muni :
- d'un verrou (22) pour la fixation amovible du pied d'appui (11) au longeron (2) correspondant,
- d'un dispositif de blocage (20) comprenant un élément de blocage (21) pouvant être appuyé contre le tube profilé (10) et
- d'un élément de transmission (30) pouvant être actionné à la main, mobile aussi bien par rapport à l'élément de blocage (21) qu'au verrou (22), afin de transmettre le mouvement d'entraînement en même temps à l'élément de blocage (21) et au verrou (22),
**caractérisée en ce que** l'élément de blocage (21) du dispositif de blocage (20) fait partie intégrante d'un bras de blocage (23) s'étendant dans la direction longitudinale du tube profilé (10), qui est conçu comme un bras de levier et dont l'extrémité opposée à l'élément de blocage (21) est reliée de manière articulée à l'élément de transmission (30).

2. Galerie de toit selon la revendication 1, **caractérisée en ce que** l'élément de transmission (30) est disposé de manière mobile par rapport au pied d'appui (11) dans au moins deux degrés de mouvement.

3. Galerie de toit selon l'une des revendications 1 ou 2, **caractérisée en ce que** l'élément de transmission est un bras articulé (30) avec au moins deux articulations (A, B), dont la première articulation (A) relie indirectement ou directement le bras articulé (30) avec l'élément de blocage (21) et la deuxième articulation (B) relier indirectement ou directement le bras articulé (30) avec le verrou (22).

4. Galerie de toit selon l'une des revendications 1 à 3, **caractérisée en ce que** l'élément de transmission est un levier articulé (30) à deux bras avec un premier bras de levier (31) qui s'étend entre une première articulation (A) et une deuxième articulation (B), et un deuxième bras de levier (32) rigide par rapport au premier bras de levier (31) dont l'extrémité (39) opposée au premier bras de levier (31) sert à actionner le bras articulé (30).

5. Galerie de toit selon la revendication 4, **caractérisée par** une poignée pivotante (45) reliée de manière articulée avec l'extrémité (39) du deuxième bras de levier (32).

6. Galerie de toit selon la revendication 5, **caractérisée en ce que** la poignée pivotante (45) est conçue comme une coque qui recouvre, dans l'état de fermeture, le pied d'appui (11) et une section d'extrémité du tube profilé (10) vers le haut, de préférence le recouvre également dans la direction longitudinale du véhicule.

7. Galerie de toit selon la revendication 5 ou 6, **caractérisée en ce que** la poignée pivotante (45) et pivotante autour d'un axe (47) qui est guidée longitudinalement contre le tube profilé (10).

8. Galerie de toit selon l'une des revendications 3 à 7, **caractérisée en ce que** l'extrémité du verrou (22) opposée à l'articulation (B) est conçu comme un crochet (22a) verrouillable par complémentarité de forme dans une rainure (24) ou une contre-dépouille du longeron (2).

9. Galerie de toit selon la revendication 8, **caractérisée en ce que** la rainure (24) ou la contre-dépouille est ouverte vers le bas et le crochet (22a) est ouvert vers le haut.

10. Galerie de toit selon l'une des revendications précédentes, **caractérisée en ce que** le verrou (22) est prévu pour le réglage de sa longueur efficace avec un élément fileté (41).

11. Galerie de toit selon l'une des revendications précédentes, **caractérisée en ce que**, sur le pied d'appui (11) se trouve un guidage rigide pour le guidage longitudinal du verrou (22) entre sa position verrouillée et sa position déverrouillée.

12. Galerie de toit selon l'une des revendications précédentes, **caractérisée en ce que** le bras de blocage (23) s'étend, sur la majeure partie de sa longueur, à l'intérieur du tube profilé (10).

13. Galerie de toit selon la revendication 12, **caractérisée en ce que** l'extrémité du bras de blocage (23) la plus proche de l'élément de blocage (21) est reliée au pied d'appui, **en ce que** le tube profilé (10) comprend, pour le passage de cette liaison (19), une fente longitudinale (29) et **en ce que** la longueur de la fente longitudinale (29) est au moins égale à la capacité de coulissement longitudinal du pied d'appui (11) par rapport au tube profilé (10).
